# EUROPÄISCHE PATENTSCHRIFT

(11) **EP 2 909 401 B1**
(45) Veröffentlichungstag und Bekanntmachung des Hinweises auf die Patenterteilung: **05.07.2017**
(21) Anmeldenummer: 13779568.8
(22) Anmeldetag: 17.10.2013
(51) Int. Cl.: E05B 47/06, E05B 41/00

(54) **TÜRBETÄTIGUNGSTEIL MIT INTEGRIERTER KUPPLUNG**
DOOR ACTUATION PART WITH INTEGRATED COUPLING
PARTIE D'ACTIONNEMENT DE PORTE DOTÉE D'UN COUPLAGE INTÉGRÉ

(30) Priorität: 17.10.2012 DE 102012020451; 17.10.2012 DE 102012020450
(43) Veröffentlichungstag der Anmeldung: 26.08.2015
(73) Patentinhaber: dormakaba Deutschland GmbH, 58256 Ennepetal (DE)
(72) Erfinder: SCHWEITZER, Falko, 58332 Schwelm (DE); LORENZ, Leo, 85456 Wartenberg (DE)
(74) Vertreter: Balder IP Law, S.L.
(86) Internationale Anmeldenummer: PCT/EP2013/071756
(87) Internationale Veröffentlichungsnummer: WO 2014/060531

(56) Entgegenhaltungen:
- EP-A2- 0 976 896
- EP-A2- 1 731 696
- EP-A2- 1 881 134
- DE-A1- 19 854 454
- DE-A1-102004 009 992
- DE-U1- 29 703 559
- DE-U1-202005 003 764

## Beschreibung

Die Erfindung betrifft ein Türbetätigungsteil nach dem Oberbegriff des Anspruchs 1, umfassend ein Gehäuse und eine Kupplung. Des Weiteren betrifft die Erfindung ein System nach dem Oberbegriff von Anspruch 13, welches zumindest ein erfindungsgemäßes Türbetätigungsteil, einen Schließzylinder, ein das Türbetätigungsteil und den Schließzylinder verbindendes Verbindungselement, das ein- oder mehrteilig ausgestaltet ist, zumindest ein drehfest mit einer Schließnocke des Schließzylinders verbindbares Kopplungselement, das drehfest mit einer Kupplungsscheibe in Eingriff gelangt, und einen Kupplungsschieber, der aus einer Außerkontaktstellung in eine Kontaktstellung mit der Kupplungsscheibe antreibbar ist, wobei in der Außerkontaktstellung des Kupplungsschiebers das Türbetätigungsteil ohne Übertragung eines Drehmoments auf die Schließnocke frei drehbar ist, und wobei in Kontaktstellung des Kupplungsschiebers mit der Kupplungsscheibe über das Kopplungselement ein an dem Türbetätigungsteil anliegendes Drehmoment auf die Schließnocke übertragbar ist.

Türbetätigungsteile, die ein Gehäuse und eine Kupplung umfassen, sind an sich bekannt. Auch Systeme, die Türbetätigungsteile und Schließzylinder umfassen, sind bekannt. Als Türbetätigungsteile werden im Sinne der Anmeldung beispielsweise Türgriffe, Türknaufe oder elektro(mecha)nische Drehknäufe verstanden, über die bei manueller Betätigung eine Tür entriegelt oder geöffnet werden kann. Elektro(mecha)nische Drehknäufe werden insbesondere dazu benutzt, um ein Schloss von einer Türseite erst nach vorheriger Authentifizierung, beispielsweise mittels eines Chips oder einer Ausweiskarte zu entriegeln. Ohne eine derartige Authentifizierung ist der elektro(mecha)nische Drehknauf, d. h. im Sinne der Anmeldung das Türbetätigungsteil von einem dazugehörenden Schließzylinder entkuppelt. Ein Drehen des Drehknaufs führt daher nicht zu einer Drehung des Schließzylinders, insbesondere nicht zu einem Mitdrehen eines Schließnockens, der sich im Inneren des Schlosses mitdreht.

Da sich der Schließnocken im Entkupplungsfall nicht mit dem Drehknauf mitdreht, wird das Schloss nicht entriegelt und somit kann die Tür nicht geöffnet werden. Liegt jedoch über eine Authentifizierung eine Berechtigung zum Öffnen der Tür vor, wird über ein Antriebselement, welches beispielsweise ein Motor oder ein mechanischer Schließzylinder sein kann, ein Kupplungsschieber mit einem Kupplungselement formschlüssig in Eingriff gebracht, so dass ein an dem Drehknauf anliegendes Drehmoment über den Kupplungsschieber und das damit formschlüssig verbundene Kupplungselement auf den Schließnocken eines Schließzylinders übertragen wird.

Aus der DE 102 352 01 B4 ist ein Türschließsystem bekannt, bei dem über eine Steuereinheit, die sich innerhalb eines Drehknaufs befindet, der Drehknauf mit einem Schließzylinder gekoppelt ist. Dazu weist die Steuereinheit einen im Inneren des Gehäuses angeordneten Stellmotor auf, der die mechanischen Bauteile der Steuereinheit antreibt und der von einer Steuerschaltung gesteuert wird. Dabei treibt der Stellmotor ein Steuerzahnrad an, welches einen Teil eines Steuergetriebes bildet. Das Steuergetriebe setzt die Drehbewegung des Stellmotors in eine Linearbewegung eines Steuerschiebers um. Der Steuerschieber umfasst dabei eine Steuerspindel, die einen Außengewindeabschnitt aufweist, der mit einem Innengewinde in einer Durchgangsbohrung des Steuerzahnrads in Eingriff steht. Auf der Steuerspindel befindet sich ein Steuernocken, der eine Steuernase und eine Steuerfläche aufweist. Der Steuernocken bildet dabei das zentrale Funktionselement, das auf mechanische Weise über einen Kontakt mit verschiedenen Bauteilen der Steuereinheit die unterschiedlichen Funktionsstellungen des Schließsystems herstellt. Nachteilig bei dieser konstruktiv aufwendigen Ausgestaltung der mechanischen Steuereinheit, nämlich die Umsetzung der Drehbewegung des Stellmotors in eine Linearbewegung des Steuerschiebers über ein Steuergetriebe, ist, dass diese Ausführung eines Stellantriebes vergleichsweise viel Energie benötigt. Zudem befindet sich der Steuerschieber, über den das an dem Türbetätigungsteil anliegende Drehmoment im Kupplungsfall auf den Schließnocken übertragen werden soll, außerhalb des Gehäuses des Türbetätigungsteils. Dabei wird der Steuernocken längs der Drehachse auf den Schließzylinder verfahren und tritt in eine axiale Aussparung des Schließzylinders bzw. in ein Zwischenstück, welches den Schließzylinder mit dem Türbetätigungsteil koppelt. Durch diese räumliche Trennung des Steuernockens von dem Stellmotor außerhalb des Drehknaufs, werden Verbindungselemente benötigt, die zum einen die räumliche Distanz zwischen dem im Drehknauf angeordneten Motor und dem Steuernocken überwinden und über die die Drehbewegung des Motors in eine lineare Bewegung umgesetzt wird, so dass das bekannte Türschließsystem nicht energieeffizient ausgeführt sein kann.

Die Schrift EP 0 976 896 A2 offenbart ein Schließsystem für Türen mit einem einer Türinnenseite zugeordneten Innendrehknopf, der mit einem Schließelement zur Betätigung eines Riegels drehfest verbunden ist, einem Außendrehknopf, einer Kupplungseinheit und einem Bewegungssensor. Der Bewegungssensor dient dazu, eine Drehbewegung der Kupplungseinheit nachzuweisen. Wird eine Drehbewegung nachgewiesen, so wird eine axiale Bewegung eines Mitnehmers, d. h. Kupplungsschiebers, verhindert.

Aufgabe der vorliegenden Erfindung ist es, die aus dem Stand der Technik bekannte konstruktiv aufwendige Bauart eines Türbetätigungsteils in ein mit wenigen Bauteilen konstruiertes Türbetätigungsteil umzusetzen. Zudem ist es die Aufgabe der vorliegenden Erfindung die Kapazität eines Türbetätigungsteils dadurch zu erhöhen, dass dieses durch konstruktiv einfache Maßnahmen und dadurch energieeffizient ausgeführt ist. Diese Aufgabe wird ausgehend von einem Türbetätigungsteil gemäß des Oberbegriffs des Anspruch 1 in Verbindung mit dessen kennzeichnenden Merkmalen gelöst. Vorteilhafte Weiterbildungen der vorliegenden Erfindung sind in den abhängigen Ansprüchen angegeben.

Die Erfindung schließt die technische Lehre ein, dass ein Sensor in Form zumindest einer Lichtschranke die Stellung des Kupplungsschiebers optoelektronisch erfasst, wobei die Bauteile der Lichtschranke direkt auf einer Platine bestückt sind.

Die Kupplung ist in dem Gehäuse integriert. Im Sinne der Anmeldung wird integriert so verstanden, dass die Kupplung mit all ihren wesentlichen Bestandteilen vollintegriert in dem Gehäuse des Türbetätigungsteils aufgenommen ist.

Diese Lösung bietet den Vorteil, dass das erfindungsgemäße Türbetätigungsteil ohne einen speziellen Schließzylinder, in dem für die Kupplung relevante Elemente angeordnet sind, an jedweden Schließzylinder anschließbar ist. Zudem bietet das erfindungsgemäße Türbetätigungsteil den Vorteil, dass durch Integration der Kupplung in das Gehäuse des Türbetätigungsteils auf ein Getriebe verzichtet werden kann, welches eine Drehbewegung eines Antriebselements in eine außerhalb des Türbetätigungsteils lineare Bewegung eines Kupplungselementes umsetzt. Dadurch kann der Energieverbrauch des erfindungsgemäßen Türbetätigungsteils drastisch reduziert werden.

In vorteilhafterweise umfasst die Kupplung, die innerhalb des Gehäuses des Türbetätigungsteils integriert ist, eine Kupplungsscheibe und zumindest ein Antriebselement, über das der Kupplungsschieber antreibbar ist. Dabei gelangt der Kupplungsschieber in Kupplungsstellung bevorzugt in Formschluss mit der Kupplungsscheibe.

In bevorzugter Weise wird der Kupplungsschieber direkt von dem Antriebselement linear angetrieben. Für das Antreiben des Kupplungsschiebers innerhalb des Gehäuses des Türbetätigungsteils eignet sich insbesondere ein Motor, in Form eines Zugstellmotors, über den eine Spindel linear angetrieben wird. Vorzugsweise sitzt dabei der Kupplungsschieber auf dem freien Ende der Spindel, so dass dieser ohne eine Umsetzung über ein Getriebe direkt von dem Motor bzw. dem Antriebselement angetrieben wird. Natürlich kann es sich bei dem Antriebselement auch um einen handelsüblichen Schließzylinder, der mit einem Schlüssel oder anderweitig betätigt wird, oder einen Schalter handeln, welche in Kontakt mit dem Kupplungsschieber stehen, und diesen linear in- und außer- Kontakt mit der Kupplungsscheibe bewegen.

Durch die durch das Antriebselement betriebene Bewegung des Kupplungsschiebers in Richtung der Kupplungsscheibe, die Bestandteil der integrierten Kupplung ist, gelangt der Kupplungsschieber in eine Kontaktstellung mit der Kupplungsscheibe. Um einen Formschluss zwischen der Kupplungsscheibe mit dem Kupplungsschieber zu erhalten, weist die Kupplungsscheibe bevorzugt Ausnehmungen und/oder in ihrem äußeren Umfang Nasen auf, in die, bzw. an die der Kupplungsschieber mit seinem dem Antriebselement abgewandten Ende, vorzugsweise mit einem daran ausgestalteten Eingriffselement, beispielsweise in Form einer Nase oder eines Zylinders, in Formschluss gelangt. Im Falle des Formschlusses des Kupplungsschiebers mit dem Kupplungselement, d. h. in Kontaktstellung mit der Kupplungsscheibe ist das Gehäuse mit der Schließnocke über ein als Kupplungswelle ausgestaltetes Kopplungselement kraft- und/oder formschlüssig verbunden. In dieser Stellung, nämlich in der Kontaktstellung oder auch Kupplungsstellung bezeichnet, wird ein an dem Türbetätigungsteil anliegendes Drehmoment, bzw. ein an dem Gehäuse des Türbetätigungsteils anliegendes Drehmoment, wobei das Gehäuse mit dem Kupplungsschieber in Eingriff gelangt, über das Kupplungselement auf den Schließzylinder, und hier insbesondere auf den Schließnocken übertragen. Das Merkmal Kupplungselement soll vorliegend insbesondere als Kupplungsscheibe verstanden werden, die zusammen mit dem Kupplungsschieber die in dem Gehäuse integrierte Kupplung bildet.

Erfindungsgemäß wird der Antrieb des Kupplungsschiebers in die Kontaktstellung bzw. die Außerkontaktstellung mit der Kupplungsscheibe, über welche letztendlich der Schließnocken drehfest gelagert ist, innerhalb des Gehäuses des Türbetätigungsteils ausgeführt.

Zur Positionsüberwachung der Kupplung, genauer gesagt zur Positionsüberwachung des Kupplungsschiebers, dient erfindungsgemäß ein Sensor. Über den Sensor können bevorzugt die Kupplungszustände ausgekuppelt, d. h. Außerkontaktstellung des Kupplungsschiebers mit dem Kupplungselement, eingekuppelt, d. h. Kontaktstellung des Kupplungsschiebers mit dem Kupplungselement und eine Zwischenstellung, die zwischen der Au-ßerkontakt- und Kontaktstellung des Kupplungsschiebers mit dem Kupplungselement liegt, erfasst werden. Erfindungsgemäß wird als Sensor, der die Stellung des Kupplungsschiebers, d. h. den Kupplungszustand erfasst, ein optoelektronischer Sensor in Form zumindest einer Lichtschranke verwendet. Dabei umfasst die Lichtschranke bevorzugt ein Infrarot-LED (IR LED) und einen Fototransistor der in einem Abstand gegenüber der IR LED platziert ist. Dabei werden die Bauteile der Lichtschranke, nämlich die IR LED und der Fototransistor erfindungsgemäß direkt auf eine Platine bestückt, die bevorzugt innerhalb des Gehäuses vor der Kupplungsscheibe gelagert ist. Damit der Kupplungsschieber durch die Platine von dem Antriebselement linear bewegt werden kann, weist die Platine bevorzugt eine Ausnehmung auf, die eine lineare Bewegung des Kupplungsschiebers erlaubt. Vorzugsweise ist beidseitig der Platine, d. h. auf beiden Flächen der Platine jeweils eine Lichtschranke auf die Platine bestückt. Dabei wirkt die Platine in vorteilhafterweise als Schattenelement, um eine Kreuzreaktion, d. h. ein Auftreffen des Infrarotstrahles der einen Lichtschranke auf den Fototransistor der anderen Lichtschranke zu verhindern. Um den Lichtstrahl der Lichtschranken zu durchbrechen, und um darüber die Position des Kupplungsschiebers erfassen zu können, weist der Kupplungsschieber ein Segel auf, welches bei der linearen Bewegung des Kupplungsschiebers durch die Lichtschranken geführt wird.

Als Türbetätigungsteil mit vollintegrierter Kupplung sind im Sinne der Erfindung mechanische Drehknäufe, elektro(mecha)nische Drehknäufe und Türgriffe zu verstehen.

Weiterhin wird die Aufgabe von einem System gemäß des Anspruchs 12 gelöst. Vorteilhafte Weiterbildungen des Systems sind in den abhängigen Ansprüchen angegeben.

Das erfindungsgemäße System schließt die technische Lehre ein, dass die Kupplungsscheibe und der Kupplungsschieber in das Türbetätigungsteil integriert sind.

Um Wiederholungen bezüglich der Vorteile des erfindungsgemäßen Systems, die sich durch die Integration des Kupplungsschiebers und der Kupplungsscheibe, d. h. die Integration der Kupplung in das Türbetätigungsteil ergeben, wird auf die Ausführungen zu dem erfindungsgemäßen Türbetätigungsteil verwiesen.

In bevorzugter Weise kommt bei dem System ein Verbindungselement zum Einsatz, welches das Türbetätigungsteil und den Schließzylinder über einen variablen Abstand miteinander verbindet, wobei der Abstand zwischen dem Türbetätigungsteil und dem Schließzylinder über das Verbindungselement einstellbar ist. Um bezüglich der gegebenen Variabilität die Funktionsweise des Türbetätigungsteils in dem System zu erhalten, muss auch die Drehmomentübertragung von dem Türbetätigungsteil auf den Schließzylinder über einen variablen Abstand, der durch das Verbindungselement geschaffen wird, einstellbar sein. Um diesen variablen bzw. einstellbaren Abstand zu gewährleisten, ist an der Kupplungsscheibe ein Zapfen ausgebildet, der durch eine Bohrung des Verbindungselements greift. Der Zapfen selber weist auch eine Bohrung auf, in die ein Kopplungselement in Form einer Kupplungswelle, die mit dem Schließnocken verbunden ist, drehfest in Eingriff gebracht wird. Da sowohl die Kupplungswelle als auch der Zapfen der Länge des Verbindungselementes angepasst sind, und der drehfeste Eingriff der Kupplungswelle in die Bohrung des Zapfens der Kupplungsscheibe und des Verbindungselementes erfolgt, ist auch die Drehmomentübertragung von dem Türbetätigungsteil über das Kupplungselement auf den Schließzylinder, dem Abstand des Türbetätigungsteils zu dem Schließzylinder entsprechend, variabel einstellbar.

Um die Bauteile des Systems zu reduzieren, ist das dem Türbetätigungsteil zugewandte Ende des Verbindungselements vorzugsweise als Boden für das Gehäuse des Türbetätigungsteils ausgestaltet. Um das Gehäuse vor einem unbeabsichtigten, bzw. beabsichtigten Abziehen von dem Verbindungselement zu unterbinden, ragt das Gehäuse über den Umfang des Bodens und ist vorzugsweise mit dem Boden verbördelt.

An dem Boden, der durch das Verbindungselement gebildet wird, kommt innerhalb des Gehäuses das Kupplungselement, hier insbesondere die Kupplungsscheibe zur Anlage. Um eine Kollision des Kupplungsschiebers, hier insbesondere des Eingriffselements mit beispielsweise einer im Umfang der Kupplungsscheibe ausgebildeten Nasen zu verhindern, sind an dem Boden Permanentmagnete angeordnet, die gleichpolig zu an der Kupplungsscheibe angeordneten Permanentmagneten sind. Die Abstoßung durch die gleichpoligen Permanentmagneten führt dazu, dass sich die im Umfang der Kupplungsscheibe ausgestalteten Nasen außerhalb eine Kollisionsstellung zu dem Kupplungsschieber befinden.

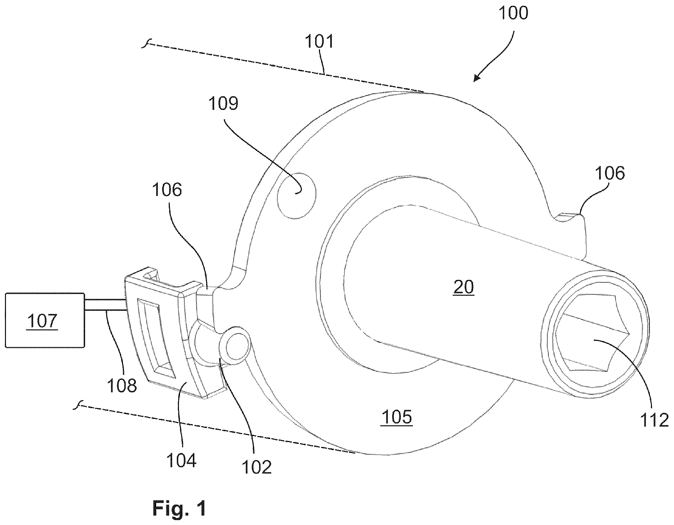

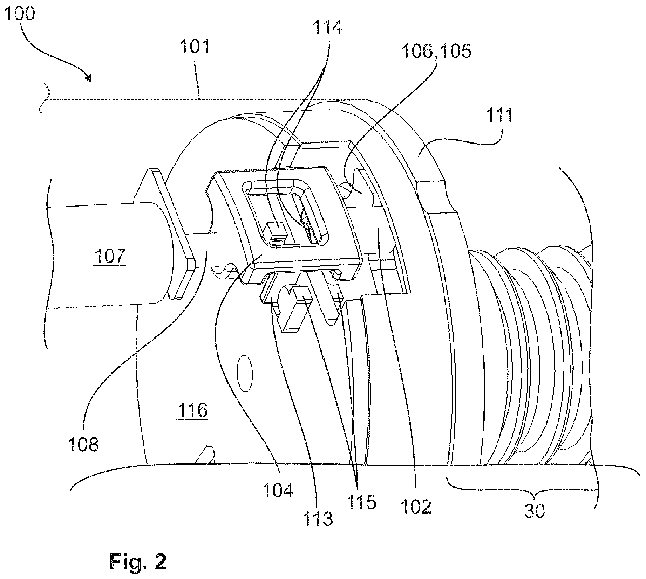

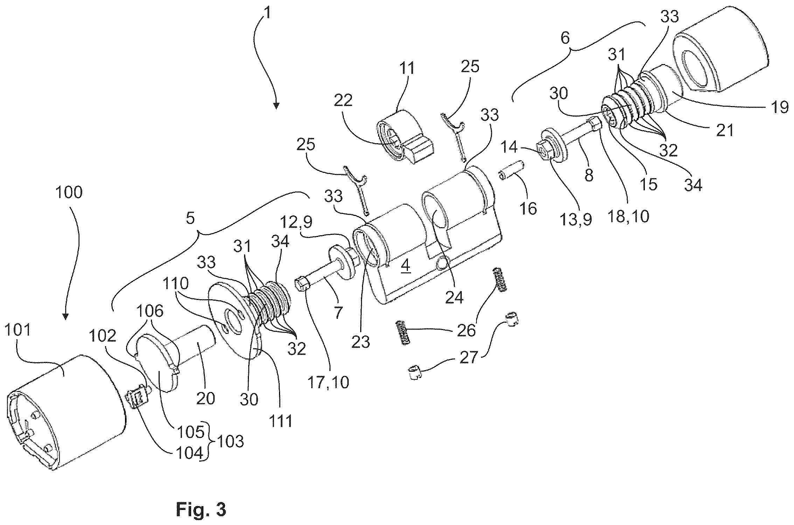

Weitere Vorteile des Systems werden anhand der Figurenbeschreibung zur Figur 3 beschrieben und sind das Türbetätigungsteil betreffend aus den Figuren 1 und 2 herleitbar.

Insgesamt werden weitere, die Erfindung verbessernde Maßnahmen nachstehend mit der Beschreibung eines bevorzugten Ausführungsbeispiels der Erfindung anhand der Figuren näher dargestellt. Es zeigen:
- Fig. 1: ein erfindungsgemäßes Türbetätigungsteil, welches ein Gehäuse und eine in dem Gehäuse integrierte Kupplung umfasst, in einer perspektivischen Teilansicht,
- Fig. 2: das Türbetätigungsteil mit der darin integrierten Kupplung aus Fig. 1, welches mit einem Verbindungselement verbunden ist, in perspektivischer Ansicht auf die innerhalb des Gehäuses an der Platine angeordneten Lichtschranken, und
- Fig. 3: eine Explosionszeichnung eines erfindungsgemäßen Systems, welches zwei Türbetätigungsteile, einen Schließzylinder und die Türbetätigungsteile mit dem Schließzylinder verbindende Verbindungselemente umfasst.

In den unterschiedlichen Figuren sind gleiche Teile stets mit denselben Bezugszeichen versehen, weshalb diese in der Regel auch nur einmal beschrieben werden.

Figur 1 zeigt ein Ausführungsbeispiel eines erfindungsgemäßen Türbetätigungsteils 100. Das Türbetätigungsteil 100 umfasst ein Gehäuse 101, welches in der vorliegenden Figur 1 als unterbrochene Linie dargestellt ist, und eine Kupplung 103, welche eine Kupplungsscheibe 105 und einen Kupplungsschieber 104 umfasst. Die Kupplungsscheibe 105 und der Kupplungsschieber 104 sind wie in der Figur dargestellt integrale Bestandteile des Gehäuses 101 des Türbetätigungsteils 100. D.h., dass die Kupplungsscheibe 105 und der Kupplungsschieber 104, also die Kupplung 103, voll umfänglich in dem Gehäuse 101 des Türbetätigungsteils 100 aufgenommen sind. Der Kupplungsschieber 104 wird von einem Antriebselement 107 angetrieben. Dazu ist der Kupplungsschieber 104 auf einer Spindel 108 angeordnet, die mit dem Antriebselement 107 verbunden ist. Wie in der Figur 1 dargestellt, ist der Kupplungsschieber 104 innerhalb des Gehäuses 101 über ein Eingriffselement 102 mit an der Kupplungsscheibe 105 ausgebildeten Nasen 106 kraft- und/oder formschlüssig verbunden. In dieser Stellung ist der Kupplungsschieber 104 in die Kontaktstellung mit der Kupplungsscheibe 105 von dem Antriebselement 107 über die Spindel 108 angetrieben. In dieser Kontaktstellung ist ein an dem Gehäuse 101 des Türbetätigungsteils 100 anliegendes Drehmoment über den Kupplungsschieber 104, der mit dem Gehäuse 101 in Eingriff gelangt, über das an den Nasen 106 der Kupplungsscheibe 105 kraft- und/oder formschlüssig verbundene Eingriffselement 102 über die Kupplungsscheibe 105 und über einen an der Kupplungsscheibe 105 ausgebildeten Zapfen 20 auf ein Kopplungselement 7 übertragbar. Das Kopplungselement 7 greift dabei mit seinem Ende 17, das als Sechskant ausgeführt ist, bzw. auf das eine Sechskantmutter 10 geschraubt ist, in eine Bohrung 112, die an dem Zapfen 20 der Kupplungsscheibe 105 ausgestaltet ist. Der Zapfen 20 wird, wie besser in der folgenden Figur 3 gezeigt, durch die Bohrung eines Verbindungselementes 5 geführt, wodurch die Kupplungsscheibe 105 zur Anlage an einem von dem Verbindungselement 30 gebildeten Boden 111 des Gehäuses 101 gelangt.

Um eine Kollisionsstellung des Eingriffselementes 102 des Kupplungsschiebers 104 auf die Nasen 106 der Kupplungsscheibe 105 zu vermeiden, sind an der dem Zapfen 20 zugewandten Fläche der Kupplungsscheibe 105 Permanentmagneten 109 an der Kupplungsscheibe 105 angeordnet. An dem Boden 111 des Verbindungselementes 30 sind zu den Permanentmagneten 109 der Kupplungsscheibe 105 gleichgepolte Permanentmagneten 110 angeordnet. Aufgrund der Lage der Permanentmagneten 109 und 110 zueinander kann so die Kupplungsscheibe 105 zu dem Boden 111 des Verbindungsteils 30 so ausgerichtet werden, dass eine Kollision des Kupplungsschieber 105, insbesondere des Eingriffselementes 102 auf die Nasen 106 der Kupplungsscheibe 105 vermieden werden, so dass das Eingriffselement 102 am Umfang der Kupplungsscheibe 105 an des Nasen 106 in Eingriff gelangt.

Das Antriebselement 107, welches in der Figur nur schematisch dargestellt ist, kann ein Motor, beispielsweise ein DC-Motor, ein Drucksteller, ein Schalter oder aber auch ein Schließzylinder sein, welche eine lineare Bewegung des Kupplungsschiebers 104 über die Spindel 108 bewirken. Natürlich kann dazu die Spindel 108 auch durch ein anderes das Antriebselement 107 und mit dem Kupplungsschieber 104 verbindendes Verbindungselement ausgeführt sein.

Figur 2 zeigt das Türbetätigungsteil 100 aus Figur 1 in einer perspektivischen Seitenansicht, wobei durch ein Fenster, welches in dem Kupplungsschieber 104 ausgestaltet ist, ein Blick auf einen Sensor, hier vorliegend zwei parallel zueinander beabstandete Lichtschranken, die jeweils aus einem IR LED 114 und einem Fototransistor 115 bestehen. Die beiden Lichtschranken sind dabei auf eine zweiseitige Platine 116 bestückt, und zwar derart, dass die zwischen den Lichtschranken ausgestaltete Platine 116 als Schattenelement zwischen den Lichtschranken dient. Dadurch kann verhindert werden, dass das von dem IR LED 114 der einen Lichtschranke ausgesendete Licht nicht auf den Fototransistor 115 der anderen auf der anderen Seite der Platine 116 angeordneten Lichtschranke trifft. Unterhalb des Kupplungsschiebers 104 ist an dem Kupplungsschieber 104 ein Segel 113 ausgestaltet, welches mit der linearen Verschiebung des Kupplungsschiebers 104, die von dem Antriebselement 107 über die Spindel 108 angetrieben wird, durch die Lichtschranken gleitet, und dabei das von den IR LEDs 114 auf die Fototransistoren 115 ausgerichteten Lichtstrahle unterbricht, wobei die Unterbrechung der Lichtstrahle als Signal zur Positionserfassung des Kupplungsschiebers 104 genutzt wird.

Figur 3 zeigt eine Explosionsansicht eines Ausführungsbeispiel eines erfindungsgemäßen Systems 1, umfassend ein Ausfürhrungsbeispiel eines erfindungsgemäßen Türbetätigungsteile 100 und ein als Drehknauf ausgebildetes Türbetätigungsteil 3, einen Schließzylinder 4 und die Türbetätigungsteile 100 und 3 und den Schließzylinder 4 verbindende Verbindungselemente 5 und 6, welche vorliegend mehrteilig ausgestaltet sind, und welche die Türbetätigungsteile 100 und 3 und den Schließzylinder 4 über einen variablen Abstand miteinander verbinden, wobei der Abstand zwischen den Türbetätigungsteilen 100 und 3 und dem Schließzylinder 4 über die Verbindungselemente 5 und 6 einstellbar ist.

Die Verbindungselemente 5 und 6 umfassen Rasterwellen 30 durch die jeweils ein das Drehmoment von den Türbetätigungsteilen 100 auf den Schließzylinder 4 übertragendes Kopplungselement 7 im Falle des Verbindungselements 5 greift bzw. das Drehmoment von den Türbetätigungsteilen 3 auf den Schließzylinder 4 übertragendes Kopplungselement 8 im Falle des Verbindungselements 6 in dieses eingreift. Die Kopplungselemente 7 und 8 sind dabei bevorzugt als Welle ausgebildet.

Um die Rasterwellen 30 der Verbindungselemente 5 und 6 aufnehmen zu können, weist der Schließzylinder 4 Aufnahmen 23 und 24 auf, die in üblicher Weise zur Aufnahme eines Zylinderkerns dienen. Zur Lagerung der Rasterwellen 30 in den Aufnahmen 23 und 24 weisen die Rasterwellen 30 an ihren den Türbetätigungsteilen 100 und 3 abgewandten Enden 34 jeweils eine Lagerfläche 34 auf. Dabei weist die Lagerfläche 34 einen geringfügig größeren Durchmesser auf als der Durchmesser der Ringe 31 bzw. Wellenkämme der Rasterwelle 30. Dadurch ist nicht nur eine Lagerung der Rasterwelle 30 in dem Schließzylinder 4 gewährleistet, sondern der geringfügig größere Durchmesser der Lagerfläche in Bezug auf die Ringe 31 der Rasterwelle 30 erhöht die Beweglichkeit der Rasterwelle 30 in der Aufnahme 23 oder 24 außerhalb ihrer axialen Erstreckung. D. h., dass die Freiheitgrade einer Ausrichtung zu einem in einem Schloss ausgerichteten Schließzylinder 4 durch die eben beschriebene Ausgestaltung der Rasterwelle 30 noch erhöht werden. Auf der den Türbetätigungsteilen 100 und 3 zugewandten Enden ist ebenfalls jeweils eine Lagerfläche 33 an den Rasterwellen 30 ausgestaltet, die einen geringfügig größeren Durchmesser aufweisen als der Durchmesser der Ringe 31 bzw. Wellenkämme der Rasterwelle 30. Die Lagerflächen 33 werden bevorzugt in Ausgleichselementen in Form eines Clips bzw. eines Rosettenlagers, welche vorliegend nicht dargestellt sind, gelagert. Insofern sind die Rasterwellen an zwei Stellen gelagert, nämlich über die Lagerflächen 33 und 34, nämlich zum einen in den Aufnahmen 23 und 24 des Schließzylinders 4 als auch zum anderen in hier vorliegend nicht dargestellten Rosettenlagern im Bereich der Türbetätigungsteile 100 und 3.

An ihren jeweils den Türbetätigungsteilen 100 und 3 abgewandten Enden 12 und 13 weisen die Kopplungselemente 7 und 8 eine Außenkontur in Form einer Sechskantmutter 9 auf, wobei die Sechskantmutter 9 drehfest mit einer Schließnocke 11 des Schließzylinders 4 in Eingriff gelangt.

Dazu weist die Schließnocke 11 eine hier exemplarisch durchgehende Bohrung 22 in Form einer Sechskantbohrung auf, mit der sie mit den Enden 12 und 13 der Kopplungselemente 7 und 8 in Eingriff gelangt. Dabei kann das Kopplungselement 7 an sich als Sechskant ausgestaltet sein, der mit Bohrung 22 der Schließnocke 11 drehfest in Eingriff gelangt.

Vorliegend weisen die Kopplungselemente 7 und 8 an ihren den Türbetätigungsteilen 100 und 3 abgewandten Enden 12 und 13 zudem jeweils eine Bohrung 14 auf, in die jeweils nach Ineingriffbringen der Enden 12 und 13 mit der Schließnocke 11 ein die Enden 12 und 13 verbindender und insbesondere die Enden 12 und 13 verklemmender Spannbolzen 16 eingeschoben wird.

An den jeweils den Türbetätigungsteilen 100 und 3 zugewandten Enden 17 und 18 weisen die Kopplungselemente 7 und 8 ebenfalls eine Außenkontur in Form einer Sechskantmutter 10 auf, die in einer Bohrung 15 der Rasterwelle 30 des Verbindungselements 6 drehfest in Eingriff gelangt. Die Bohrung 15 ist dabei als Sechskantbohrung ausgeführt, um die Sechskantmutter 10 drehfest aufnehmen zu können. Natürlich kann das Kopplungselement 7 an sich auch als Sechskant ausgestaltet sein, der mit Bohrung 15 der Rasterwelle 30 des Verbindungselements 6 drehfest in Eingriff gelangt. Vorliegend sind die Sechskantmuttern 9 und 10 an den Enden 12, 13, 17 und 18 der Kopplungselemente 7 und 8 unterschiedlich groß ausgestaltet, was eine Orientierung der Kopplungselemente 7 und 8 bei der Montage des Systems 1 erleichtert. Natürlich kann die Außenkontur der Enden 12, 13, 17 und 18 der Kopplungselemente 7 und 8 auch eine andere Kontur als die einer Sechskantmutter 9 und 10 sein, wie beispielsweise in Form von eines Torx oder eines Innsechskantes. Natürlich müssen dann auch die Bohrungen, die zur Aufnahme der Kopplungselemente 7 und 8 dienen, der Form der Enden 12, 13, 17 und 18 angepasst sein. Es ist auch nicht zwingend notwendig, beispielsweise die Bohrung 15 der Außenkontur dem Ende 18 des Kopplungselements 8 anzupassen, damit das Kopplungselement 8 in einen drehfesten Eingriff mit der Bohrung 15 gelangt. Die Bohrung 15 könnte beispielsweise auch als Sackloch ausgeführt sein, in die das Kopplungselement 8 mit seinem Ende 18 eingepresst wird. Natürlich ist es auch denkbar, unterschiedliche Bohrungen bzw. unterschiedliche Außenkonturen der Enden 12, 13, 17 und 18 in Kombination miteinander vorzusehen. So könnte beispielsweise an einem Türbetätigungsteil 2 oder 3 die Bohrung 15 als Sackloch ausgeführt sein und eine der Bohrung 15 entsprechende Bohrung an dem anderen Türbetätigungsteil 3 oder 2 als Sechskantbohrung ausgeführt sein. Diese Ausgestaltung könnte beispielsweis für eine bessere Orientierung bei der Montage des Systems dienen.

Das Verbindungselement 5 umfasst in der hier speziellen Ausführung des erfindungsgemäßen Systems 1 neben der Rasterwelle 20 und dem Kopplungselement 7 an der dem linken Türbetätigungsteil 5 zugewandten Seite eine Kupplungsscheibe 105, die mit einem Zapfen 20 in die Rasterwelle 30 des Verbindungselements 5 greift.

Der Zapfen 20 weist eine zumindest in Richtung des Kopplungselementes 7 weisende, korrespondierende Ausnehmung bzw. Bohrung auf, mit der sie mit dem Ende 17 des Kopplungselementes 7 drehfest in Eingriff gelangt. Die Bohrung ist in Figur 3 verdeckt und daher nicht sichtbar. Die Rasterwelle 30 des Verbindungselements 5 in dem hier speziellen Ausführungsbeispiel ist daher frei rotierbar auf dem Kopplungselement 7 gelagert, und insbesondere auf dem Zapfen 20 der Kupplungsscheibe 105, wobei der Zapfen 20 drehfest mit dem Kopplungselement 7 in Eingriff gelangt, frei rotierbar gelagert.

Das Türbetätigungsteil 100 ist über das Gehäuse 101 auf das Verbindungselement 5 drehfest über den den Boden 111 des Gehäuses 101 bildenden Teil der Rasterwelle 30 aufsetzbar, wobei die Kupplungsscheibe 105 integriert, d h. in dem Gehäuse 101 des Türbetätigungsteils 100 aufgenommen wird, so dass im entkuppelten Zustand kein Drehmoment vom Türbetätigungsteil 100 über das Kopplungselement 7 auf den Schließzylinder 4 übertragen wird. Die drehfeste Verbindung zwischen der Rasterwelle 30 und dem Gehäuse 101 kann beispielsweise durch Vernieten, Verkleben, Verschweißen des Gehäuses 101 mit dem Boden 111 erfolgen. Bevorzugt kann die Verbindung aber auch durch Verbördeln des Gehäuses 101 mit dem Boden 111 erfolgen. Auch ist es denkbar, den Boden 111 in das Gehäuse 101 einzupressen oder anderweitig kraft-, stoff- und/oder formschlüssig mit dem Gehäuse 101 zu verbinden.
Da sich der Schließnocken 11 im Entkupplungsfall nicht mit dem Türbetätigungsteil 100 mitdreht, wird das Schloss nicht entriegelt und somit kann die Tür nicht geöffnet werden. Erst eine Authentifizierung mittels beispielsweise Chip, Code oder Karte führt zu einer Kupplung des Türbetätigungsteils 100 mit der Kupplungsscheibe 19, so dass das am Türbetätigungsteil 100 anliegende Drehmoment über die Kupplungsscheibe 19 und insbesondere über den an der Kupplungsscheibe 19 ausgebildeten Zapfen 20 auf das Kopplungselement 7 und darüber auf die Schließnocke 11 übertragen wird.

Im Gegensatz dazu ist das Türbetätigungsteil 3 an dem Ende der Rasterwelle 30 des Verbindungselements 6, welches dem Türbetätigungsteil 3 zugewandt ist, an einer Aufnahme 19 drehfest gelagert, so dass bei Betätigung des Türbetätigungsteils 3 über die Rasterwelle 30 und das Kopplungselement 8 das anliegende Drehmoment auf den Schließzylinder 4 übertragen wird. Als Tiefenanschlag für das Türbetätigungsteil 3 ist an dem Ende der Rasterwelle 30 des Verbindungselements 6 an der Aufnahme 19 ein umlaufender Kragen 21 ausgebildet.

Um zu gewährleisten, dass die Verbindungselemente 5 und 6 nach der Montage des Systems 1 nicht wieder aus den Ausnahmen 23 und 24 des Schließzylinders 4 herausgezogen werden können, sind an jeder Aufnahme 23 und 24 des Schließzylinders 4 Sicherungselemente 25 vorgesehen.

Die Sicherungselemente 25 sind unterhalb der Aufnahmen 23 und 24 in einer nicht dargestellten Bohrung im Schließzylinder 4 an einem den unteren Teil der Sicherungselemente 25 bildenden stiftartigen Abschnitt gehalten und werden in Schlitzen 33 im Schließzylinder 4 im Bereich der Aufnahmen 23 und 24 geführt. Auf die stiftartigen Abschnitte der Sicherungselemente 25 ist dabei vorzugsweise eine Druckfeder 26 aufgeschoben, so dass die Sicherungselemente 25 nach oben hin, d. h. in Richtung der Aufnahmen 23 und 24 federbelastet sind. Wäre die Rasterwelle des Verbindungselements 5 oder 6 entgegen der Darstellung in Aufnahmen der Türbetätigungsteile 100 und 3 aufnehmbar, wäre es denkbar, die Sicherungselemente 25 an den Türbetätigungsteilen 100 und 3 auszugestalten. Dabei könnten die Sicherungselemente 25 auch als Schrauben oder als einschiebbare Stifte ausgebildet sein. Vorliegend eignen sich jedoch vorzugsweise federbelastete Sicherungselemente 25, da der Schließzylinder 4 überlicherweise im Schloss einer Tür verbaut ist und eine manuelle Sicherung durch Sicherungselemente 25, die als Schraube oder als einschiebbarer Stift ausgebildet sind, bei der Montage nicht möglich ist.

Der obere Teil der Sicherungselemente 25 wird durch einen sichelförmigen Abschnitt gebildet. Der sichelförmige Abschnitt ist dabei an die Größe der Rasterwelle 30 des Verbindungselements 5 und 6, insbesondere an deren Wellentäler, welche als außenliegende Ringnut 31 ausgestaltet sind, angepasst. Beim Einschieben der Rasterwelle 30 des Verbindungselements 5 oder 6 greift somit das Sicherungselement 25 mit seinem sichelförmigen Abschnitt aufgrund der Federbelastung, die von der Druckfeder 26 über den unteren stiftartigen Teil des Sicherungselements 25 auf den sichelförmigen Abschnitt des Sicherungselements 25 übertragen wird, automatisch in eine Ringnut 31 der Rasterwelle 30 des Verbindungselements 5 oder 6 und gleitet beim weiteren Vorschieben der Rasterwelle 30 des Verbindungselements 5 oder 6 zur Schließnocke 11 hin wieder aus der Ringnut 31 und rutscht über den der Ringnut 31 folgenden Ring 32 der Rasterwelle 30 des Verbindungselements 5 oder 6. Danach greift das Sicherungselement 25 dem Vorschub der Rasterwelle 30 des Verbindungselements 5 oder 6 entsprechend in die folgende Ringnut 31 ein. Um dabei den Anforderungen der Variabilität des erfindungsgemäßen Systems bei der Montage gerecht zu werden, ist es daher von Vorteil, die Rasterwelle 30 des Verbindungselements 5 oder 6 mit entsprechend vielen Ringen 32 und Ringnuten 31 in dichter Aufeinanderfolge, d. h. mit gerigem Abstand zueinander auszugestalten, um so einen variablen Abstand zwischen den Türbetätigungsteilen 100 und 3 und dem Schließzylinder 4 einstellen zu können. Sollte die Aufeinanderfolge der Ringnuten 31 und der Ringe 32, d. h. die Ausgestaltung der Rasterwelle 30 des Verbindungselements 5 oder 6 dazu führen, dass das Sicherungselement 25 gerade nicht in eine Ringnut 31 greift, sondern an einem Ring 32 anliegt, bietet es sich vorteilhafter Weise an Distanzscheiben in dem erfindungsgemäßen System zu verbauen, so dass das Sicherungselement 25 von dem Ring 32 der Rasterwelle 30 des Verbindungselements 5 oder 6 in eine dem Ring 32 vorhergehende Ringnut 31 greift.

Zur Sicherung der Druckfeder 26 und des Sicherungselements 25 in der Bohrung des Schließzylinders 4 ist im unteren Teil der Bohrung eine Gewindehülse 27 auf einen Gewindeabschnitt aufschraubbar, wobei der Gewindeabschnitt entweder am unteren Teil des Sicherungselements 25 oder in der Wandung der Bohrung ausgestaltet sein kann. Aufgrund der Vorspannung der Druckfeder 26, welche über die Gewindehülse 27 einstellbar ist, drückt das Sicherungselement 25 mit seinem oberen Teil, der vorliegend als sichelförmiger Abschnitt ausgestaltet ist, gegen die Rasterwelle 30 des Verbindungselements 5 oder 6, wodurch das Sicherungselement 25 mit seinem oberen Teil in eine Ringnut 31 der Rasterwelle 30 des Verbindungselements 5 oder 6 selbsttätig eingreift.

Um ein mehrteiliges Sicherungselement 25, welches in der hier vorgesehenen Funktionsweise eine Druckfeder 26 und eine Gewindehülse 27 umfasst, könnte auch ein Sicherungselement 25 mit angeprägter Blattfeder zur Sicherung der Rasterwelle 30 in der Aufnahme 23 und/oder 24 in einer nicht dargestellten Bohrung im Schließzylinder 4 gehalten und in Schlitzen 33 im Schließzylinder 4 im Bereich der Aufnahmen 23 und 24 geführt werden.

Anstelle der in der Figur 3 dargestellten Türbetätigungsteile 100 und 3, die als Drehknäufe ausgestaltet sind, wobei das Türbetätigungsteil 100 ein spezieller elektro(mecha)nischer Drehknauf ist, können im Sinne der Erfindung die Türbetätigungsteile 100 und 3 auch beidseitig beispielsweise als einfache Drehknäufe oder Türgriffe ausgestaltet sein. Natürlich sind auch Kombinationen von Türgriffen mit Drehknäufen oder mit elekt-ro(mecha)nischen Drehknäufen denkbar. Auch einseitig feststehende Türknäufe sind im Sinne der Erfindung mit Drehknäufen, elekt-ro(mecha)nischen Drehknäufen und Türgriffen kombinierbar. Auch ist es denkbar, dass erfindungsgemäße System in einem Knaufzylinder zu verbauen, der auf einer Seite mit einem Schlüssel und auf der anderen Seite mit einem fest montierten drehbaren Knauf betätigt wird. Insgesamt lässt sich das erfindungsgemäße System für verschiedene Bauformen, wie beispielsweise Profilzylinder, Rundzylinder, Ovalzylinder, die als Halb- und oder Doppelzylinder ausgestaltet sind, verwenden.

Zudem soll das System wie auch das Türbetätigungsteil nicht nur für die Montage in Türen verstanden werden. Vielmehr ist es auch denkbar, das System zur Montage von Fensterbetätigungsteilen zu verwenden, bzw. das erfindungsgemäße Türbetätigungsteil als Fensterbetätigungsteil zu verwenden.

### Bezugszeichenliste

- 1: System
- 3: Türbetätigungsteil
- 4: Schließzylinder
- 5: Verbindungselement
- 6: Verbindungselement
- 7: Kopplungselement
- 8: Kopplungselement
- 9: Sechskantmutter

- 10: Sechskantmutter
- 11: Schließnocke
- 12: Ende zu 7
- 13: Ende zu 8
- 14: Bohrung in 8
- 15: Bohrung in 30 zu 6
- 16: Spannbolzen
- 17: Ende zu 7
- 18: Ende zu 8

- 19: Aufnahme für 3 zu 30
- 21: Kragen
- 22: Bohrung in 11
- 23: Aufnahme in 4
- 24: Aufnahme in 4
- 25: Sicherungselement
- 26: Druckfeder
- 27: Gewindehülse
- 30: Rasterwelle
- 31: Ring zu 30
- 32: Ringnut zu 30
- 33: Lagerfläche zu 30
- 34: Lagerfläche zu 30
- 100: Türbetätigungsteil
- 101: Gehäuse
- 102: Eingriffselement zu 104
- 103: Kupplung
- 104: Kupplungsschieber

- 105: Kupplungsscheibe
- 106: Nasen zu 105
- 107: Antriebselement
- 108: Spindel zu 107
- 109: Permanentmagnet zu 105
- 110: Permanentmagnet zu 111
- 111: Boden zu 101 an 30
- 112: Bohrung zu 20
- 113: Segel zu 104

- 114: IR LED
- 115: Fototransistor (Photo Transistor)
- 116: Platine

## Patentansprüche

1. Türbetätigungsteil (100), umfassend ein Gehäuse (101) und eine Kupplung (103), wobei die Kupplung (103) in dem Gehäuse (101) integriert ist und einen Kupplungsschieber (104) umfasst, **dadurch gekennzeichnet, dass** ein Sensor in Form zumindest einer Lichtschranke die Stellung des Kupplungsschiebers (104) optoelektronisch erfasst, wobei die Bauteile der Lichtschranke direkt auf einer Platine (116) bestückt sind.

2. Türbetätigungsteil (100) nach Anspruch 1,
**dadurch gekennzeichnet,**
**dass** die Kupplung (103) eine Kupplungsscheibe (105) und zumindest ein Antriebselement (107) umfasst, über das der Kupplungsschieber (104) antreibbar ist.

3. Türbetätigungsteil (100) nach Anspruch 2,
**dadurch gekennzeichnet,**
**dass** die Kupplungsscheibe (105) zumindest eine Nase (106), Ausnehmung oder Aussparung umfasst, welche mit einem Eingriffselement (102) des Kupplungsschiebers (104) in Eingriff gelangen.

4. Türbetätigungsteil (100) nach Anspruch 2 oder 3, **dadurch gekennzeichnet,**
**dass** das Antriebselement (107) den Kupplungsschieber (104) aus einer Außerkontaktstellung in eine Kontaktstellung mit der Kupplungsscheibe (105) antreibt.

5. Türbetätigungsteil (100) nach Anspruch 4,
**dadurch gekennzeichnet,**
**dass** das Antriebselement (107) den Kupplungsschieber (104) aus der Kontaktstellung in die Außerkontaktstellung mit der Kupplungsscheibe (105) antreibt.

6. Türbetätigungsteil (100) nach Anspruch 4 oder 5,
**dadurch gekennzeichnet,**
**dass** in der Kontaktstellung der Kupplungsschieber (104) das Gehäuse (101) mit der Kupplungsscheibe (105) kraft- und/oder formschlüssig verbindet.

7. Türbetätigungsteil (100) nach einem der Ansprüche 4 bis 6,
**dadurch gekennzeichnet,**
das in der Kontaktstellung der Kupplungsschieber (104) ein an dem Gehäuse (101) anliegendes Drehmoment auf die Kupplungsscheibe (105) überträgt.

8. Türbetätigungsteil (100) nach einem der Ansprüche 2 bis 7, **dadurch gekennzeichnet,**
**dass** das Antriebselement (107) den Kupplungsschieber (104) direkt antreibt.

9. Türbetätigungsteil (100) nach einem des Ansprüche 2 bis 8, **dadurch gekennzeichnet, dass** das Antriebselement (107) ein Motor, ein Schließzylinder oder ein Schalter ist.

10. Türbetätigungsteil (100) nach einem der vorhergehenden Ansprüche, **dadurch gekennzeichnet,**
**dass** der Sensor die Kontaktstellung, die Außerkontaktstellung und eine Zwischenstellung erfasst.

11. Türbetätigungsteil (100) nach einem der vorhergehenden Ansprüche, welches als Türgriff, Türknauf, mechanischer Drehknauf oder als elektromechanischer Drehknauf ausgestaltet ist.

12. System umfassend zumindest ein Türbetätigungsteil (100), nach einem der vorhergehenden Ansprüche, einen Schließzylinder (4), ein das Türbetätigungsteil (100) und den Schließzylinder (4) verbindendes Verbindungselement (5, 6), das ein- oder mehrteilig ausgestaltet ist, zumindest ein drehfest mit einer Schließnocke (11) des Schließzylinders (4) verbindbares Kopplungselement (7), das drehfest mit einer Kupplungsscheibe (105) in Eingriff gelangt, und einen Kupplungsschieber (104), der aus einer Außerkontaktstellung in eine Kontaktstellung mit der Kupplungsscheibe (105) antreibbar ist, wobei in der Außerkontaktstellung des Kupplungsschiebers (104) das Türbetätigungsteil (100) ohne Übertragung eines Drehmoments auf die Schließnocke (11) frei drehbar ist, und wobei in Kontaktstellung des Kupplungsschiebers (104) mit der Kupplungsscheibe (105) über das Kopplungselement (7) ein an dem Türbetätigungsteil (100) anliegendes Drehmoment auf die Schließnocke (11) übertragbar ist,
wobei die Kupplungsscheibe (105) und der Kupplungsschieber (104) in das Türbetätigungsteil (100) integriert sind.

13. System nach Anspruch 12,
**dadurch gekennzeichnet,**
**dass** das Verbindungselement (5, 6) das Türbetätigungsteil (100) und den Schließzylinder (4) über einen variablen Abstand miteinander verbindet, wobei der Abstand zwischen dem Türbetätigungsteil (100) und dem Schließzylinder (4) über das Verbindungselement (5, 6) einstellbar ist.

14. System nach Anspruch 12 oder 13,
**dadurch gekennzeichnet,**
**dass** das Verbindungselement (5) eine Bohrung aufweist, durch die das Kopplungselement (7) geführt ist und in drehfesten Eingriff mit der Kupplungsscheibe (105) gelangt.

15. System nach einem der Ansprüche 12 bis 14,
**dadurch gekennzeichnet,**
**dass** das dem Türbetätigungsteil (100) zugewandte Ende des Verbindungselements (5) als Boden (111) für das Gehäuse (101) des Türbetätigungsteils (100) ausgestaltet ist.

16. System nach Anspruch 15,
**dadurch gekennzeichnet,**
**dass** das Gehäuse (101) den Boden (111) zumindest abschnittsweise umgreift.

## Claims

1. A door operating member (100), comprising a housing (101) and a coupling (103), wherein the coupling (103) is incorporated into the housing (101) and comprises a coupling slider (104),
**characterized in**
**that** a sensor in the shape of a light barrier opto-electrically captures the position of the coupling slider (104), wherein the structural parts of the light barrier are directly mounted onto a printed circuit board (116).

2. The door operating member (100) according to claim 1,
**characterized in**
**that** the coupling (103) comprises a coupling disc (105) and at least one driving element (107) by means of which the coupling slider (104) may be driven.

3. The door operating member (100) according to claim 2,
**characterized in**
**that** the coupling disc (105) comprises at least one catch (106), opening or recess, which reaches engagement with an engaging element (102) of the coupling slider (104).

4. The door operating member (100) according to claim 2 or 3,
**characterized in**
**that** the drive element (107) drives the coupling slider (104) from an out-of-contact position into an in-contact position with the coupling disc (105).

5. The door operating member (100) according to claim 4,
**characterized in**
**that** the drive element (107) drives the coupling slider (104) from the in-contact position into the out-of-contact position form the coupling disc (105).

6. The door operating member (100) according to claim 4 or 5,
**characterized in**
**that** in the in-contact position, the coupling slider (104) non-positively and/or positively connects the housing (101) to the coupling disc (105).

7. The door operating member (100) according to any of the claims 4 to 6,
**characterized in**
**that** in the in-contact position, the coupling slider (104) transfers a torque applied to the housing (101) onto the coupling disc (105).

8. The door operating member (100) according to any of the claims 2 to 7,
**characterized in**
**that** the drive element (107) directly drives the coupling slider (104).

9. The door operating member (100) according to any of the claims 2 to 8,
**characterized in**
**that** the drive element (107) consists of a motor, a locking cylinder or a switch.

10. The door operating member (100) according to any of the preceding claims,
**characterized in**
**that** the sensor captures the in-contact position, the out-of-contact position, and an intermediate position.

11. The door operating member (100) according to any of the preceding claims, which is configured as a door handle, a door knob, a mechanical rotating knob or as an electromechanical rotating knob.

12. A system comprising at least one door operating member (100) according to any of the preceding claims, a locking cylinder (4), a connecting element (5, 6) connecting the door operating member (100) and the locking cylinder (4), which element is configured in one or more pieces, at least one coupling element (7) which is connectable in a torque-proof manner to a locking cam (11) of the locking cylinder (4), which element reaches a torque-proof engagement with a coupling disc (105), and a coupling slider (104), which is drivable from an out-of-contact position into an in-contact position with the coupling disc (105), wherein, in the out-of-contact position of the coupling slider (104), the door operating member (100) is freely rotatable without transmission of a torque onto the locking cam (11), and wherein in the in-contact position of the coupling slider (104) with the coupling disc (105), a torque applied to the door operating member (100) may be transferred onto the locking cam (11) via the coupling element (7), wherein the coupling disc (105) and the coupling slider (104) are incorporated into the door operating member (100).

13. The system according to claim 12,
**characterized in**
**that** the connecting element (5, 6) connects the door operating member (100) and the locking cylinder (4) to each other via a variable distance, wherein the distance between the door operating member (100) and the locking cylinder (4) is adjustable via the connecting element (5, 6).

14. The system (12) according to claim 12 or 13,
**characterized in**
**that** the connecting element (5) includes a bore through which the coupling element (7) is passed and reaches torque-proof engagement with the coupling disc (105).

15. The system (1) according to any of the claims 12 to 14,
**characterized in**
**that** the end of the connecting element (5) facing the door operating member (100) is configured as a bottom (111) for the housing (101) of the door operating member (100).

16. The system according to claim 15,
**characterized in**
**that** the housing (101) surrounds the bottom (111) at least portion-wise.

## Revendications

1. Membre d'actionnement de porte (100), comprenant un boîtier (101) et un accouplement (103), l'accouplement (103) étant incorporé dans le boîtier (101) et comprenant un coulisseau d'accouplement (104),
**caractérisé en ce**
**qu'**un capteur sous forme d'au moins une barrière photoélectrique détecte la position du coulisseau d'accouplement (104) de façon optoélectrique, les composants de la barrière photoélectrique étant montés directement sur une platine (106).

2. Membre d'actionnement de porte (100) selon la revendication 1,
**caractérisé en ce**
**que** l'accouplement (103) comprend un disque d'accouplement (105) et au moins un élément d'entraînement (107) par l'intermédiaire duquel le coulisseau d'accouplement (104) peut être entraîné.

3. Membre d'actionnement de porte (100) selon la revendication 2,
**caractérisé en ce**
**que** le disque d'accouplement (105) comprend au moins un ergot (106), un évidement ou un découpage, lesquels arrivent à entrer en prise avec un élément d'engrènement (102) du coulisseau d'accouplement (104).

4. Membre d'actionnement de porte (100) selon la revendication 2 ou 3,
**caractérisé en ce**
**que** l'élément d'entraînement (107) entraîne le coulisseau d'accouplement (104) depuis une position hors contact vers une position en contact avec le disque d'accouplement (105).

5. Membre d'actionnement de porte (100) selon la revendication 4,
**caractérisé en ce**
**que** l'élément d'entraînement (107) entraîne le coulisseau d'accouplement (104) depuis la position en contact vers la position hors contact avec le disque d'accouplement (105).

6. Membre d'actionnement de porte (100) selon la revendication 4 ou 5,
**caractérisé en ce**
**que**, dans la position en contact, le coulisseau d'accouplement (104) relie le boîtier (101) au disque d'accouplement (105) par la force et/ou par la forme.

7. Membre d'actionnement de porte (100) selon l'une des revendications 4 à 6,
**caractérisé en ce**
**que**, dans la position en contact, le coulisseau d'accouplement (104) transfert un moment de rotation appliqué au boîtier (101) vers le disque d'accouplement (105).

8. Membre d'actionnement de porte (100) selon l'une des revendications 2 à 7,
**caractérisé en ce**
**que** l'élément d'entraînement (107) entraîne directement le coulisseau d'accouplement (104).

9. Membre d'actionnement de porte (100) selon l'une des revendications 2 à 8,
**caractérisé en ce**
**que** l'élément d'entraînement (107) est un moteur, un cylindre de fermeture ou un commutateur.

10. Membre d'actionnement de porte (100) selon l'une des revendications précédentes,
**caractérisé en ce**
**que** le capteur détecte la position en contact, la position hors contact et une position intermédiaire.

11. Membre d'actionnement de porte (100) selon l'une des revendications précédentes, lequel est aménagé comme poignée de porte, pommeau de porte, comme pommeau tournant mécanique ou comme pommeau tournant électromécanique.

12. Système, comprenant au moins un membre d'actionnement de porte (100) selon l'une des revendications précédentes, un cylindre de fermeture (4), un élément de connexion (5, 6) reliant le membre d'actionnement de porte (100) et le cylindre de fermeture (4), lequel élément est aménagé en une ou plusieurs parts, au moins un élément d'accouplement (7) pouvant être relié à un ergot de fermeture (11) du cylindre de fermeture (4), lequel élément arrive à venir en prise avec un disque d'accouplement (105), et un coulisseau d'accouplement (104), lequel peut être entraîné depuis une position hors contact vers une position en contact avec le disque d'accouplement (105), dans la position hors contact du coulisseau d'accouplement (104) le membre d'actionnement de porte (100) étant librement rotatif sans transmission d'un moment de rotation vers l'ergot de fermeture (11), et, dans la position en contact du coulisseau d'accouplement (104) avec le disque d'accouplement (105), un moment de rotation appliqué au membre d'actionnement de porte (100) pouvant être transféré vers l'ergot de fermeture (11) par l'intermédiaire de l'élément d'accouplement (7),
le disque d'accouplement (105) et le coulisseau d'accouplement (104) étant incorporés dans le membre d'actionnement de porte (100).

13. Système selon la revendication 12,
**caractérisé en ce**
**que** l'élément de connexion (5, 6) relie le membre d'actionnement de porte (100) et le cylindre de fermeture (4) l'un à l'autre par l'intermédiaire d'une distance variable, la distance entre le membre d'actionnement de porte (100) et le cylindre de fermeture (4) pouvant être ajustée par l'intermédiaire de l'élément de connexion (5, 6).

14. Système (12) selon la revendication 12 ou 13,
**caractérisé en ce**
**que** l'élément de connexion (5) présente un alésage à travers lequel l'élément d'accouplement (7) passe et arrive à venir en prise avec le disque d'accouplement (105) de façon à résister à la rotation.

15. Système (1) selon l'une des revendications 12 à 14,
**caractérisé en ce**
**que** l'extrémité de l'élément de connexion (5) orienté vers le membre d'actionnement de porte (100) est aménagée comme fond (111) pour le boîtier (101) du membre d'actionnement de porte (100).

16. Système selon la revendication 15,
**caractérisé en ce**
**que** le boîtier (101) entoure le fond (111) au moins partiellement.
